# EUROPÄISCHE PATENTSCHRIFT

(11) **EP 0 965 218 B1**
(45) Veröffentlichungstag und Bekanntmachung des Hinweises auf die Patenterteilung: **30.10.2002**
(21) Anmeldenummer: 98916846.3
(22) Anmeldetag: 03.03.1998
(51) Int. Cl.: H04M 3/40, H04M 3/00

(54) **KOMMUNIKATIONSSYSTEM MIT EINSTELLBARER ÜBERTRAGUNGSCHARAKTERISTIK**
COMMUNICATION SYSTEM WITH ADJUSTABLE TRANSMISSION CHARACTERISTIC
SYSTEME DE COMMUNICATION AVEC CARACTERISTIQUE DE TRANSMISSION REGLABLE

(30) Priorität: 03.03.1997 DE 19708525
(43) Veröffentlichungstag der Anmeldung: 22.12.1999
(73) Patentinhaber: SIEMENS AKTIENGESELLSCHAFT, 80333 München (DE)
(72) Erfinder: HÖFER, Gerald, D-86853 Langerringen (DE); CALDERA, Peter, A-9500 Villach (AT); KUNISCH, Paul, D-82178 Puchheim (DE)
(86) Internationale Anmeldenummer: DE9800632
(87) Internationale Veröffentlichungsnummer: WO98039900

(56) Entgegenhaltungen:
- DE-A- 4 139 610
- GB-A- 2 076 262
- PATENT ABSTRACTS OF JAPAN vol. 010, no. 233 (E-427), 13. August 1986 & JP 61 066452 A (NEC CORP), 5. April 1986
- PATENT ABSTRACTS OF JAPAN vol. 007, no. 174 (E-190), 2. August 1983 & JP 58 080956 A (NIPPON DENKI KK), 16. Mai 1983

## Beschreibung

### Die Erfindung betrifft ein Kommunikationssystem

In üblichen Telekommunikationssystemen wird die Übertragungscharakteristik des Teilnehmeranschlusses, wie zum Beispiel Eingangsimpedanz, Leitungsnachbildung, Pegel und so weiter, von den Systembetreibern nach länderspezifischen Vorgaben festgelegt. Eine feste Übertragungscharakeristik kann aber insbesondere bei Verwendung verschiedener Übertragungsdienste oder Übertragungsarten zur Folge haben, daß die Übertragungsqualität und/oder Übertragungsgeschwindigkeit je nach Übertragungsdienst oder Übertragungsart beeinträchtigt wird.

Aus Patent Abstracts of Japan vol. 007, no. 174 (E-190), 2. August 1983 & JP 58 080956 A(NIPPON DENKI KK), 16. Mai 1983, ist ein Kommunikationssystem bekannt, bei dem der Teilnehmer durch Eingabe einer Nummer die Lautstärke der Sprachsignale einstellen kann. Nachteilig ist dabei jedoch, daß bei der Übertragung von beispielsweise Datensignalen die Übertragungscharakteristik des Telekommunikaionssystems nicht durch den Teilnehmer veränderbar ist.

Aufgabe der Erfindung ist es daher, ein Kommunikationssystem anzugeben, bei dem dieser Nachteil nicht auftritt.

Diese Aufgabe wird durch ein Kommunikationssystem gemäß Patentanspruch 1 gelöst. Ausgestaltungen und Weiterbildungen des Erfindungsgedankens sind Gegenstand von Unteransprüchen.

Ein erfindungsgemäßes Kommunikationssystem umfaßt ein Übertragungsnetzwerk zur Übertragung zumindest von Nutzsignalen, mindestens eine Eingabemittel zum Eingeben von Rufnummern aufweisenden Teilnehmerendstelle,
mindestens eine eine einstellbare Übertragungscharakteristik aufweisende, zwischen eine Teilnehmerendstelle und das Übertragungsnetzwerk geschaltete Teilnehmeranschlußeinheit, eine an das Übertragungsnetzwerk angeschlossene Erkennungseinheit zur Erkennung bestimmter Rufnummernkonstellationen und zur Abgabe von bestimmten, Rufnummernkonstellationen entsprechenden Steuersignalen, und
eine zwischen die Erkennungseinheit und die Teilnehmeranschlußeinheit geschaltete Steuereinheit zum Einstellen der Übertragungscharakteristik der Teilnehmeranschlußeinheit in Abhängigkeit von den durch die Erkennungseinheit bereitgestellten Steuersignalen.

Bei dem Übertragungsnetzwerk handelt es sich bevorzugt um ein digitales Übertragungsnetzwerk. Es umfaßt beispielsweise eine Vermittlungseinheit, die über Übertragungsmittel zur Übertragung der Nutzdaten und gegebenenfalss der Steuerdaten mit den Teilnehmerendstellen unter Zwischenschaltung jeweils einer Teilnehmeranschlußeinheit verbunden ist. Die Teilnehmeranschlußeinheit sorgt dabei für die geforderte Übertragungscharakteristik und damit auch für die geforderte Leitungsabschlußcharakteristik. Geeignete Teilnehmeranschlußeinheiten umfassen beispielsweise Mittel zur Zweidraht-Vierdraht-Umsetzung, zur Impedanzanpassung, zur Verstärkungseinstellung, zur Frequenzgangkorrektur, zur Codierung sowie im Falle der Anwendung bei einem digitalen Übertragungsnetzwerk auch zur Analog-Digital- und Digital-Analog-Umsetzung. Als Teilnehmeranschlußeinheit kommen beispielsweise Linecards, Teilnehmereinheiten bei Access-Netzwerken, Terminaladapter bei ISDN-Netzen und so weiter in Frage. Die Teilnehmerendstelle wird dabei beispielsweise durch ein Telefon, ein Faxgerät, ein Datenterminal und so weiter gebildet. Die Teilnehmerendstelle weist erfindungsgemäß Eingabemittel zum Eingeben von Rufnummern auf, wie beispielsweise jegliche Art von Tastaturen sowie durch entsprechende Bedienelemente auswählbare, entsprechende Rufnummern enthaltende Speicher, Vorrichtungen zum automatischen Erzeugen bestimmter Rufnummern und so weiter. Die Erkennungseinheit dient nun dazu, nach einer Teilnehmereingabe einer Rufnummer festzustellen, ob eine anwendungsspezifische Übertragungscharakteristik einzustellen ist. Andernfalls wird die voreingestellte Übertragungscharakteristik beibehalten. Das Erkennen des Wunsches einer anwendungsspezifischen Übertragungscharakteristik kann beispielsweise anhand der eingegebenen Rufnummer selbst vorgenommen werden, kann aber auch durch eine Wahlinformation vor der Rufnummer oder durch ein nach der Rufnummer übertragenes Erkennungssignal erfolgen. Erkennt die Erkennungseinheit den entsprechenden Wunsch des Teilnehmers, so erfolgt die Weitergabe dieser Information mittels der Steuersignale an die Steuereinheit. Die Steuereinheit beeinflußt daraufhin in der gewünschten Weise ganz oder teilweise die gemäß der Erfindung veränderbare Übertragungscharakteristik der Teilnehmeranschlußeinheit.

Bevorzugt werden dabei die für die Einstellung der Übertragungscharakteristik notwendigen Werte aus beispielsweise in den Speichern abgelegten Tabellen oder durch Berechnung aus den von der Erkennungseinheit gelieferten Steuersignale ermittelt. Dadurch lassen sich mit geringem Aufwand die notwendigen Einstellungen bestimmen.

Nach einer Weiterbildung der Erfindung ist vorgesehen, daß mindestens zwei Teilnehmerendstellen über jeweils eine Teilnehmeranschlußeinheit an das Übertragungsnetzwerk angeschlossen sind und
daß beide Teilnehmeranschlußeinheiten an die Erkennungseinheit unter Zwischenschaltung einer oder jeweils einer Steuereinheit zum Einstellen der Übertragungscharakteristik der jeweiligen Teilnehmeranschlußeinheit in Abhängigkeit von den durch die Erkennungseinheit bereitgestellten Steuersignale angeschlossen sind.

Dadurch wird erreicht, daß bei Eingabe einer bestimmten Rufnummernkonstellation nicht nur die Übertragungscharakteristik der Teilnehmeranschlußeinheit bei der rufenden Teilnehmerendstelle oder der jeweils gerufenen Teilnehmerendstelle eingestellt wird, sondern bei beiden. Vorteil dabei ist, daß die Übertragungsqualität weiter erhöht wird.

Zudem kann das Übertragungsnetzwerk Mittel zum Überprüfen der Übertragungsqualität der Verbindung zu einer Teilnehmerendstelle aufweisen, wobei die Übertragungscharakteristik des Übertragungsnetzwerkes veränderbar ist. Das Übertragungsnetzwerk paßt dabei seine Übertragungscharakteristik entsprechend an, nachdem die Mittel zum Überprüfen der Übertragungsqualität eine höhere Übertragungsqualität bei den Teilnehmeranschlußeinheiten gestellt hat. Auch damit wird die Gesamtübertragungsqualität erhöht. Alternativ kann die Steuereinheit nach dem Einstellen der vorgesehenen Übertragungscharakteristik der (jeweiligen) Teilnehmeranschlußeinheit ein Quittierungssignal an das Übertragungsnetzwerk senden, das daraufhin zumindest teilweise seine Übertragungscharakteristik ändert.

Bevorzugt wird nur ein Teil der Rufnummer von der Erkennungseinrichtung ausgewertet und für die Entscheidung, ob die Übertragungscharakteristik der Teilnehmeranschlußeinheit zu ändern ist, getroffen. So könnten beispielsweise anhand bestimmter Vorwahlnummern, bestimmter Anschlußnummern oder bestimmter Rufnummern Endungen festgestellt werden, welche Übertragungscharakteristik eingestellt werden soll. Die Auswertung der Rufnummern alleine hat den Vorteil, daß der zusätzliche Aufwand zum Erkennen sehr gering ist.

Bevorzugte Teilnehmeranschlußeinheiten umfassen eine Codiereinheit, deren Codierungskennlinie durch die Steuereinheit veränderbar ist, und/oder
eine Filtereinheit, deren Frequenzgang durch die Steuereinheit veränderbar ist, und/oder
eine Verstärkereinheit, deren Verstärkung, Dämpfung durch die Steuereinheit veränderbar ist, und/oder
eine Impedanzanpaßeinheit, deren Impedanz durch die Steuereinheit veränderbar ist.

Darüber hinaus können auch Analog-Digital-Umsetzer und Digital-Analog-Umsetzer vorgesehen werden, deren Umsetzerkennlinie ebenfalls durch die Steuereinheit verändert werden können. Insgesamt lassen sich damit vorteilhafterweise einzelne Eigenschaften der Übertragungscharakteristik gezielt verändern.

Die Erfindung wird nachfolgend anhand der in den Figuren der Zeichnung dargestellten Ausführungsbeispiele näher erläutert. Es zeigt:
- FIG 1: ein erstes Ausführungsbeispiel und
- FIG 2: ein zweites Ausführungsbeispiel eines erfindungsgemäßen Kommunikationssystems

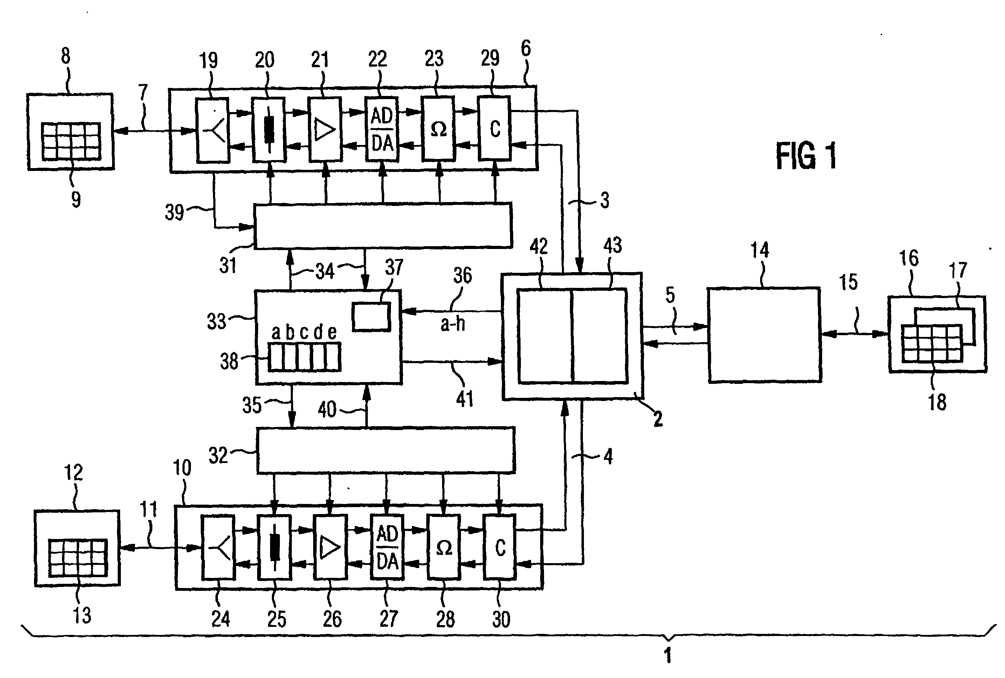

Bei dem Ausführungsbeispiel nach FIG 1 ist ein Übertragungsnetzwerk 1 vorgesehen, das neben einer Vermittlungseinheit 2 drei bidirektionale Nutzdatenverbindungen 3, 4, 5 aufweist. Daneben können noch eine Vielzahl weiterer Nutzdatenverbindungen angeschlossen sein, die jedoch aus Gründen der Übersichtlichkeit nicht dargestellt sind. Stellvertretend sind daher nur die drei genannten Verbindungen 3, 4, 5 gezeigt. Die Nutzdatenverbindung 3 ist mit einer Teilnehmeranschlußeinheit 6 verbunden, die ihrerseits über eine bidirektionale Zweidrahtleitung 7 mit einer Teilnehmerendstelle 8 gekoppelt ist. Die Teilnehmerendstelle 8 umfaßt eine Tastatur 9 zur Eingabe von Rufnummern. In gleicher Weise wie die Teilnehmeranschlußeinheit 6 und die Teilnehmerendstelle 8 ist eine Teilnehmeranschlußeinheit 10 an die Nutzdatenverbindung 4 angeschlossen. Die Teilnehmeranschlußeinheit 10 ist darüber hinaus über eine bidirektionale Zweidrahtverbindung 11 mit einer Teilnehmerendstelle 12 gekoppelt, die ebenfalls eine Tastatur 13 zur Eingabe von Rufnummern aufweist. Schließlich ist eine Teilnehmeranschlußeinheit 14 einerseits an die Nutzdatenverbindung 5 angeschlossen und andererseits über eine bidirektionale Zweidrahtverbindung 15 mit einer Teilnehmerendstelle 16 gekoppelt. Diese enthält einen Speicher 17, zur Speicherung von Rufnummern, die mittels eines Eingabefeldes 18 ausgewählt werden können.

Die Teilnehmeranschlußeinheiten 6 und 10 umfassen darüber hinaus einen Zweidraht-Vierdraht-Umsetzer 19 bzw. 24, eine Impedanzanpaßeinheit 20 bzw. 25 zur Leitungsanpassung, eine Verstärkereinheit/Dämpfungsglied 21 bzw. 26, eine Analog-Digital/Digital-Analog-Umsetzeinrichtung 22 bzw. 27, eine Filtereinheit 23 bzw. 28 sowie eine Codiereinrichtung 29 bzw. 30. Dabei ist bei der Codiereinheit 29 bzw. 30 deren Codierungskennlinie, bei der Filtereinheit 23 bzw. 28 deren Frequenzgang, bei dem Analog-Digital/Digital-Analog-Umsetzer 22 bzw. 27 die Umsetzkennlinie, bei der Verstärkereinheit 21 bzw. 26 deren Verstärkung/Dämpfung und bei der Impedanzanpaßeinheit 20 bzw. 25 deren Impedanz durch jeweils eine Steuereinheit 31 bzw. 32 veränderbar. Die Steuereinheit 31 bzw. 32 ist dazu mit den entsprechenden Einheiten 20 bis 30 jeweils verbunden. Die Steuereinheiten 31 und 32 sind jeweils über eine Steuerleitung 37 bzw. 35 mit iner Erkennungseinheit 33 verbunden, die über eine Leitung 36 an die Vermittlungseinheit 2 angeschlossen ist. Von dieser erhält die Erkennungseinheit die jeweils aktuelle Rufnummer mitgeteilt, die durch eine Vergleichereinrichtung 37 mit in einem Speicher 38 abgelegten Rufnummern oder Rufnummernfragmenten verglichen wird und bei Übereinstimmung ein entsprechendes Signal an eine der beiden oder aber an beide Steuereinheiten 31 und 32 über die Leitungen 34 bzw. 35 absetzt. Es sind demnach grundsätzlich drei Betriebsfälle unterscheidbar, nämlich daß die Teilnehmeranschlußeinheit der rufenden Stelle oder der Gegenstelle oder aber beider Stellen angepaßt wird. Wird dabei beispielsweise von der Teilnehmerendstelle 16 aus gerufen oder aber diese angerufen, so kann nur die Gegenstelle angepaßt werden, da die Teilnehmeranschlußeinheit 14 anders als die beiden Teilnehmeranschlußeinheiten 6 und 10 nicht veränderbar ist.

Nach erfolgter Einstellung bei der Netzanschlußeinheit 6 erzeugt diese ein Quittungssignal 39, das über die Steuereinheit 31 an die Erkennungseinheit 33 weitergeleitet wird. Nach erfolgter Einstellung der Teilnehmeranschlußeinheit 10 erzeugt die zugehörige Steuereinheit 32 ein weiteres Quittungssignal 40, das ebenfalls an die Erkennungseinheit 33 weitergegeben wird. Diese wiederum erzeugt aus den beiden Quittungssignalen 39 und 40 ein Gesamtquittungssignal 41, das einer Auswerteeinrichtung 42 in der Vermittlungseinheit 2 zugeführt wird. Die Auswerteeinrichtung 42 steuert daraufhin, eine entsprechende Anpaßeinrichtung 43 derart, daß die Übertragungsqualität zwischen den beiden Teilnehmerendstellen 8 und 12 optimal wird.

Zur Erkennung einer Rufnummer, die eine Veränderung der Übertragungscharakteristik zur Folge hat, wird beim vorliegenden Beispiel nur die fünf ersten Stellen a bis e einer achtstelligen Rufnummer a bis h ausgewertet. In gleicher Weise könnte aber auch die gesamte Rufnummer oder beliebige Teile der Rufnummer verwendet werden. Wird also ein bestimmter Dienstleister wie beispielsweise Internet-Dienste, Fax-Dienste etc. angewählt, so wird anhand der Rufnummer automatisch erkannt, um welchen Dienst es sich handelt und wie die entsprechende Änderung der Übertragungscharakteristik erfolgen soll. Am Verbindungsende wird schließlich die ursprünglich voreingestellte Charakteristik wieder eingestellt.

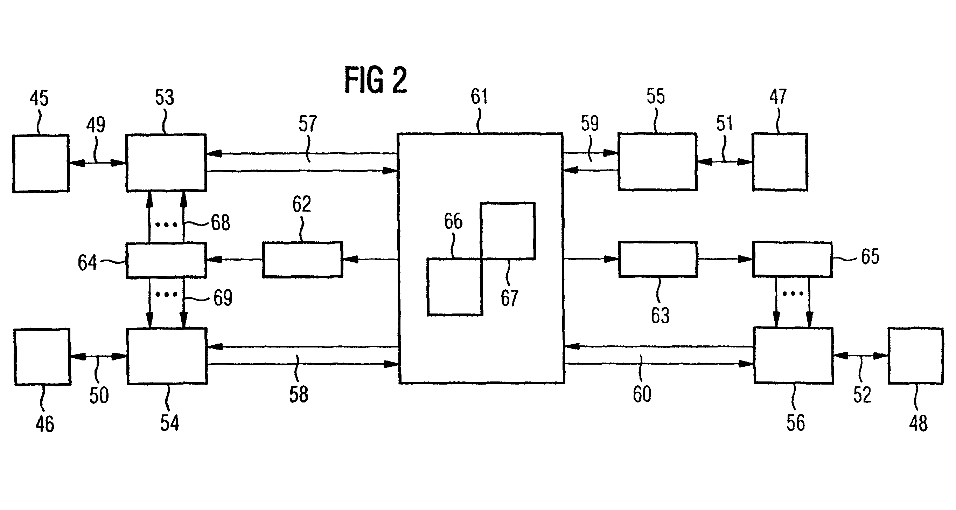

Bei dem Ausführungsbeispiel gemäß FIG 2 sind stellvertretend für weitere Teilnehmerendstellen vier Teilnehmerendstellen 45 bis 48 über jeweils eine Zweidrahtverbindung 49 bis 52, einer daran anschließenden Teilnehmeranschlußeinheit 53 bis 56 sowie jeweils einer dieser nachfolgenden Nutzdatenverbindung 57 bis 60 an eine Vermittlungseinheit 61 angeschlossen. Außerdem sind an der Vermittlungseinheit 61 zwei Erkennungseinheiten 62 und 63 angeschlossen, denen jeweils eine Steuereinrichtung 64 bzw. 65 nachgeschaltet ist. Die Steuereinheit 64 steuert dabei die Übertragungscharakteristik sowohl der Teilnehmeranschlußeinheit 53 als auch der Teilnehmeranschlußeinheit 45. Dem gegenüber steuert die Steuereinheit 65 lediglich die Teilnehmeranschlußeinheit 56. Die Teilnehmeranschlußeinheit 55 ist nicht steuerbar.

Wird nun beispielsweise bei der Teilnehmerendstelle 45 eine bestimmte Rufnummer gewählt, beispielsweise die Rufnummer eines durch die Teilnehmerendstelle 46 gegebenen Datendienstes, so erkennt die Erkennungseinheit 62 anhand der Rufnummer, daß eine reine Datenübertragung stattfinden soll, gibt diese Information an die Steuereinheit 64 weiter. Diese schließlich stellt die Übertragungscharakteristika der beiden Teilnehmeranschlußeinheiten 53 und 54 so ein, daß sie für eine Datenübertragung optimal sind. Eine Überwachungseinrichtung 66 in der Vermittlungseinheit 61 erkennt die verbesserte Übertragungscharakteristik der Teilnehmeranschlußeinheiten 53 und 54 anhand entsprechender Messungen oder am Signalverhalten und paßt daraufhin mittels einer Anpaßeinrichtung 67 auch die Übertragungscharakteristik des Übertragungsnetzwerkes, d.h. in diesem Fall die Nutzdatenverbindungen 57 und 58 sowie die Vermittlungseinheit 61 entsprechend an. Auf diese Weise kann beispielsweise eine höhere Übertragungsrate erzielt werden.

Steuert eine Steuereinheit, wie beispielsweise die Steuereinheit 64, mehrere Teilnehmeranschlußeinheiten, wie beispielsweise die Teilnehmeranschlußeinheiten 53 und 54, so kann die Steuereinheit 64 zusammen mit der Erkennungseinheit 62 beispielsweise zentral, also in unmittelbarer Nähe zur Vermittlungseinheit 61 oder sogar in dieser installiert werden. Die Übertragung der Ansteuersignale für die Teilnehmeranschlußeinheiten 53 und 54 erfolgt dabei mittels Ansteuersignalverbindungen 68 und 69 des Übertragungsnetzwerkes. Andererseits kann die Steuereinheit auch wie beispielsweise die Steuereinheit 65 dezentral in unmittelbarer Nähe der Teilnehmeranschlußeinheit 56 oder sogar in dieser selbst angeordnet werden, wobei die Erkennungseinheit 63 entweder zentral bei der Vermittlungseinheit 61 oder dezentral bei der Teilnehmeranschlußeinheit 56 angeordnet werden kann.

## Patentansprüche

1. Kommunikationssystem mit einem Übertragungsnetzwerk zur Übertragung von Nutzsignalen, wobei das Kommunikationssystem mindestens ein Eingabemittel (9, 13) zum Eingeben von Rufnummern aufweisende Teilnehmerendstelle (8, 12), mindestens eine zwischen eine Teilnehmerendstelle (8, 12) und das Übertragungsnetzwerk geschaltete Teilnehmeranschlußeinheit (6, 10), eine an das Übertragungsnetzwerk angeschlossene Erkennungseinheit (33) zur Erkennung bestimmter Rufnummerkonstellation und zur Abgabe von bestimmten, Rufnummerkonstellation entsprechende Steuersignalen (34, 35) und eine zwischen die Erkennungseinheit (33) und die Teilnehmeranschlußeinheit (8, 12) geschaltete Steuereinheit (31, 32) aufweist,
**dadurch gekennzeichnet ;**
**daß** jede Teilnehmeranschlußeinheit (6, 10) eine einstellbare Übertragungscharakteristik aufweist und die Steuereinheit derart ausgestaltet ist daß sie (31, 32) die Übertragungscharakteristik der Teilnehmeranschlußeinheit (6, 10) in Abhängigkeit von den durch die Erkennungseinheit (33) bereit gestellten Steuersignalen (34, 35) einstellt.

2. Kommunikationssystem nach Anspruch 1,
**dadurch gekennzeichnet,**
**daß** die Übertragungscharakteristik des Übertragungsnetzwerkes veränderbar ist, daß die Steuereinheit (31, 32) so ausgebildet ist, daß sie nach dem Einstellen der vorgesehenen Übertragungscharakteristik der jeweiligen Teilnehmeranschlußeinheit (8, 12) ein Quittierungssignal an das Übertragungsnetzwerk übersendet und daß das Übertragungsnetzwerk derart ausgestaltet ist, daß es daraufhin auch zumindestens teilweise seine Übertragungscharakteristik ändert.

3. Kommunikationssystem nach einem der Ansprüche 1 oder 2,
**dadurch gekennzeichnet,**
**daß** das Übertragungsnetzwerk Mittel (42) zum Überprüfen der Übertragungsqualität der Verbindung zu einer Teilnehmerendstelle (8, 12) aufweist, daß die Übertragungscharakteristik des Übertragungsnetzwerkes veränderbar ist, wobei das Übertragungsnetzwerk so ausgebildet ist, daß nach einem Feststellen einer höheren Übertragungsqualität die Übertragungscharakteristik des Übertragungsnetzwerkes angepaßt wird.

4. Kommunikationssystem nach einem der Ansprüche 1 bis 3,
**dadurch gekennzeichnet,**
**daß** die Teilnehmeranschlußeinheit (6, 10) eine Kodiereinheit (29, 30), deren Kodierungskennlinie durch die Steuereinheit (31, 33) veränderbar ist, und/oder eine Filtereinheit (23, 28) deren Frequenzgang durch die Steuereinheit (31, 32) veränderbar ist, und/oder eine Verstärkereinheit (21, 26), deren Verstärkung/Dämpfung durch die Steuereinheit (31, 32) veränderbar ist, und/oder eine Impedanzanpaßeinheit (20, 25), deren Impedanz durch die Steuereinheit (31, 32) veränderbar ist, aufweist.

5. Kommunikationssystem nach einem der vorhergehenden Ansprüche,
mit einer Speichereinheit (38) zur Verknüpfung der Übertragungscharakteristik der jeweiligen Teilnehmeranschlußeinheit (6, 10) mit den Steuersignalen mittels einer in der Speichereinheit (38) abgelegten Verknüpfungstabelle.

6. Kommunikationssystem nach einem der vorhergehenden Ansprüche,
mit einer Rechnereinheit zur Errechnung der Verknüpfung der Übertragungscharakteristik der jeweiligen Teilnehmeranschlußeinheit (6, 10) mit den Steuersignalen aus den Steuersignalen selbst.

## Claims

1. Communication system having a transmission network for transmitting useful signals, the communication system having at least one subscriber terminal (8, 12) having input means (9, 13) for inputting call numbers, at least one subscriber line unit (6, 10) connected between a subscriber terminal (8, 12) and the transmission network, a recognition unit (33) connected to the transmission network for recognizing a particular call number pattern and for outputting particular control signals (34, 35) corresponding to a call number pattern, and a control unit (31, 32) connected between the recognition unit (33) and the subscriber line unit (8, 12), **characterized in that** each subscriber line unit (6, 10) has an adjustable transmission characteristic and the control unit (31, 32) is configured in such a way that it sets the transmission characteristic of the subscriber line unit (6, 10) depending on the control signals (34, 35) provided by the recognition unit (33).

2. Communication system according to Claim 1, **characterized in that** the transmission characteristic of the transmission network can be changed, **in that** the control unit (31, 32) is designed so that it transmits an acknowledgement signal to the transmission network after the transmission characteristic provided for the respective subscriber line unit (8, 12) has been set, and **in that** the transmission network is configured in such a way that it subsequently also changes its transmission characteristic at least partly.

3. Communication system according to one of Claims 1 and 2, **characterized in that** the transmission network has means (42) for checking the transmission quality of the connection with respect to a subscriber terminal (8, 12), **in that** the transmission characteristic of the transmission network can be changed, where the transmission network is designed so that, after detection of a higher transmission quality, the transmission characteristic of the transmission network is adjusted.

4. Communication system according to one of Claims 1 to 3, **characterized in that** the subscriber line unit (6, 10) has a coding unit (29, 30) whose coding characteristic can be changed by the control unit (31, 33), and/or a filter unit (23, 28) whose frequency response can be changed by the control unit (31, 32), and/or an amplifier unit (21, 26) whose gain/attenuation can be changed by the control unit (31, 32), and/or an impedance matching unit (20, 25) whose impedance can be changed by the control unit (31, 32).

5. Communication system according to one of the preceding claims, having a memory unit (38) for logically combining the transmission characteristic of the respective subscriber line unit (6, 10) with the control signals using a combinational logic table stored in the memory unit (38).

6. Communication system according to one of the preceding claims, having a computer unit for calculating the logic combination of the transmission characteristic of the respective subscriber line unit (6, 10) with the control signals from the control signals themselves.

## Revendications

1. Système de communication comprenant un réseau de transmission pour la transmission de signaux utiles, le système de communication présentant au moins un terminal d'abonné (8, 12) présentant un moyen d'introduction (9, 13) pour l'introduction de numéros d'appel, au moins une unité de raccordement d'abonné (6, 10) raccordée entre un terminal d'abonné (8, 12) et le réseau de transmission, une unité de reconnaissance (33) raccordée au réseau de transmission, pour la reconnaissance de constellations définies de numéros d'appel et pour la fourniture de signaux de commande (34, 35) définis qui correspondent à la constellation de numéros d'appel, et une unité de commande (31, 32) raccordée entre l'unité de reconnaissance (33) et l'unité de raccordement d'abonné (8, 12),
**caractérisé en ce que**
chaque unité de raccordement d'abonné (6, 10) présente une caractéristique de transmission réglable, l'unité de commande (31, 32) étant configurée de telle sorte qu'elle règle la caractéristique de transmission de l'unité de raccordement d'abonné (6, 10) en fonction des signaux de commande (34, 35) délivrés par l'unité de reconnaissance (33).

2. Système de communication selon la revendication 1, **caractérisé en ce que** la caractéristique de transmission du réseau de transmission peut être modifiée, **en ce que** l'unité de commande (31, 32) est configurée de telle sorte qu'après le réglage de la caractéristique de transmission prévue pour chaque unité de raccordement d'abonné (8, 12), un signal de confirmation est transmis au réseau de transmission et **en ce que** le réseau de transmission est configuré de telle sorte qu'il modifie alors également au moins en partie sa caractéristique de transmission.

3. Système de communication selon l'une des revendications 1 ou 2, **caractérisé en ce que** le réseau de transmission présente des moyens (42) de vérification de la qualité de transmission de la liaison à un terminal d'abonné (8, 12), **en ce que** la caractéristique de transmission du réseau de transmission peut être modifiée, le réseau de transmission étant configuré de telle sorte qu'après constatation d'une qualité de transmission plus élevée, la caractéristique de transmission du réseau de transmission est adaptée.

4. Système de communication selon l'une des revendications 1 à 3, **caractérisé en ce que** l'unité de raccordement d'abonné (6, 10) présente une unité de codage (29, 30) dont la caractéristique de codage peut être modifiée par l'unité de commande (31, 33) et/ou une unité de filtre (23, 28) dont la courbe de réponse en fréquence peut être modifiée par l'unité de commande (31, 32) et/ou une unité d'amplification (21, 26) dont l'amplification/l'amortissement peuvent être modifiés par l'unité de commande (31, 32) et/ou une unité d'adaptation d'impédance (20, 25) dont l'impédance peut être modifiée par l'unité de commande (31, 32).

5. Système de communication selon l'une des revendications précédentes, comprenant une unité de mémoire (38) pour relier la caractéristique des transmissions de l'unité de raccordement d'abonné (6, 10) concernée aux signaux de commande au moyen d'un tableau de liaison conservé dans l'unité des mémoires (38).

6. Système de communication selon l'une des revendications précédentes, comprenant une unité de calculateur pour le calcul de la liaison de la caractéristique de transmission de l'unité de raccordement d'abonné (6, 10) concernée aux signaux de commande à partir des signaux de commande proprement dits.
